# EUROPEAN PATENT APPLICATION

(11) **EP 4 148 170 A1**
(43) Date of publication of application: **15.03.2023**
(21) Application number: 21186745.2
(22) Date of filing: 20.07.2021
(51) Int. Cl.: D01F 8/12, A01D 34/416, D02G 3/22, D01D 5/34, B24D 11/00

(54) **MONOFILAMENT FOR CUTTING VEGETATION**

(30) Priority: 21.07.2020 EP 20305834
(71) Applicant: Speed France S.A.S., 69400 Arnas (FR)
(72) Inventor: BELJEAN, Yann, 69400 ARNAS (FR)
(74) Representative: Regimbeau

(57) **Abstract**

According to an embodiment, the invention relates to a monofilament for cutting vegetation, comprising:
- a matrix (1) made of a first material comprising at least one polyamide and
- at least two channels (2, 2a-2d) separately embedded in the matrix (1), the at least two channels being made of a second material different from the first material,
wherein the second material comprises at least one biopolymer and/or at least one recycled polymer.

## Description

### FIELD OF THE INVENTION

The present invention relates to a monofilament for use in a vegetation cutting machine, and a process for manufacturing such a monofilament.

### BACKGROUND OF THE INVENTION

Monofilaments used for cutting vegetation are usually made of polyamide since this material is resistant to abrasion and heat.

One or several monofilaments may be mounted in a cutting head which forms part of a vegetation cutting machine. A free portion of the monofilament extends outside the cutting head and defines a cutting diameter of the vegetation cutting machine.

As the monofilament wears by hitting vegetation, it breaks into small fragments which fall onto the soil.

To avoid contamination of the soil with such fragments that do not degrade easily, environmental regulations require that the polyamide content of cutting monofilaments be strongly reduced and/or that alternative materials be used.

However, using other types of materials, often known as "biopolymers", may result in impaired cutting performance of the monofilament. Indeed, such biopolymers usually have a much smaller heat resistance than polyamide. As a result, the monofilament may soften during use, and even break, especially in the vicinity of the opening (also called "eyelet") from which it extends outside of the cutting head.

### SUMMARY OF THE INVENTION

Thus, there is a need for monofilaments for cutting vegetation having a composition with a reduced polyamide content, with cutting properties similar to the ones of known polyamide monofilaments.

To that end, the invention provides a monofilament for cutting vegetation, comprising:
- a matrix made of a first material comprising at least one polyamide and
- at least two channels separately embedded in the matrix, the at least two channels being made of a second material different from the first material,
wherein the second material comprises at least one biopolymer and/or at least one recycled polymer.

According to preferred but optional features of said monofilaments, which may be combined if appropriate:
- the at least two channels are each made of a different second material and/or each have a different cross section;
- the matrix extends over the whole circumference of the monofilament;
- the matrix and the at least two channels extend continuously along a longitudinal axis of the monofilament;
- the at least two channels are linear and parallel to the longitudinal axis;
- the at least two channels are arranged according to a regular pattern over the cross section of the monofilament;
- the at least two channels present a triangular cross section, an altitude of each triangle being oriented radially between a base and a vertex of the triangle and said base being located more inside the monofilament than said vertex;
- the volume of the channels is comprised between 10% and 80% of the volume of the monofilament;
- the first material comprises at least one of: polyamide 6, polyamide 6-6, copolyamide 6/66, polyamide 4-6, polyamide 6-10, polyamide 11, polyamide 12, polyamide 6T;
- the second material comprises at least one of: polysaccharide, such as thermoplastic starch (TPS) or cellulose, polyhydroxyalkanoate (PHA), polyhydroxybutyrate (PHB), polylactic acid (PLA), polybutylene succinate (PBS), polybutylene adipate terephthalate (PBAT), polycaprolactone (PCL), and thermoplastic elastomer (TPE);
- the first and second materials comprise a mixture of polyamide and starch, an amount of starch in the second material being greater than an amount of starch in the first material;
- the second material comprises a filler made of at least one of: natural fibers, such as flax, hemp, cellulose, or miscanthus, talc, silica, alumina (Al₂O₃), and titanium oxide (TiO₂);
- the weight of the channels is comprised between 20 and 80% of the weight of the monofilament;
- the monofilament is obtained by a single extrusion step;
- the first and second materials are coextruded;
- the monofilament further comprises at least one compatibilization agent configured to promote bonding of the first and second materials;
- the monofilament presents a diameter comprised between 1.6 mm and 4.5 mm;
- the monofilament comprises at least one hollow channel embedded in the matrix.

Another object relates to a process for manufacturing the monofilaments described above. In said process, the matrix and the at least two channels are formed by a single extrusion step.

### BRIEF DESCRIPTION OF THE FIGURES

Additional features and advantages of the invention will appear in the following detailed description of embodiments, based on the appended drawings, wherein:
- FIG. 1A is a perspective view of a monofilament according to a first embodiment;
- FIG. 1B is a cross sectional view of the monofilament of FIG. 1A;
- FIG. 2 is a cross sectional view of a monofilament according to a second embodiment;
- FIG. 3 is a cross sectional view of a monofilament according to a third embodiment;
- FIG. 4A is a perspective view of a monofilament according to a fourth embodiment;
- FIG. 4B is a cross sectional view of the monofilament of FIG. 4A;
- FIG. 5A is a perspective view of a monofilament according to a fifth embodiment;
- FIG. 5B is a cross sectional view of the monofilament of FIG. 5A;
- FIG. 6 is a perspective view of a cutting head comprising at least one cutting monofilament.

### DETAILED DESCRIPTION OF EMBODIMENTS OF THE INVENTION

Instead of using the conventional structure of bi-material monofilaments, comprising a core and a sheath surrounding the core, coaxial with the core, the present invention provides a monofilament comprising at least two channels embedded in a matrix, wherein the channels are separated from each other by a portion of the matrix.

The at least two channels differ by at least one feature, which may be the material and/or the cross section (size and/or shape) of the channels.

Preferably, the matrix extends over the whole circumference of the monofilament. The material of the matrix is a polyamide or a mixture of polyamides. Polyamides are usually used to form cutting monofilaments due to their high heat resistance and impact resistance.

In some embodiments, the material of the channels is a biopolymer or a recycled polymer.

In the present text, biopolymers are polymers produced by living organisms and/or any polymer complying with norm EN 13432 relating to industrial compost.

To summarize, a material considered to be compostable according to this norm shall have the following properties:
- biodegradability (metabolic conversion of the material into carbon dioxide (CO₂), water (H₂O) and humus): biodegradability is measured by standardized tests (ISO 14855); a material shall be considered to be biodegradable if 90% of biodegradation is achieved in less than six months:
- decay (fragmentation of the material and total invisibility in the compost): decay is measured by a pilot scale composting test; samples of test material are composted with organic waste for three months, then the compost is sieved with a 2 mm sieve. The mass of residues larger than 2 mm shall be less than 10% of the total mass;
- low concentration in heavy metals / good quality of the compost (in terms of ecotoxicity and agronomic value); a plant growth test is carried out on compost samples where the degradation of the material has taken place; no difference with the control compost shall be highlighted;
- constant physico-chemical parameters: the concentration in nitrogen (N), phosphorus (P), magnesium (Mg), potassium (K), pH, saline content shall remain constant after degradation of the material.

Biopolymers that may be used to form the channels of the monofilament may include the following materials: polysaccharide (e.g. thermoplastic starch (TPS), cellulose), polyhydroxyalkanoate (PHA), polyhydroxybutyrate (PHB), polylactic acid (PLA), polybutylene succinate (PBS), polybutylene adipate terephthalate (PBAT), polycaprolactone (PCL), thermoplastic elastomer (TPE), either as a single material or as a combination of at least two materials.

In the present text, recycled polymers are polymers that have already been processed at least once to manufacture a product by injection molding, extrusion, or any other manufacturing process. When the product has been disposed of, it has been cut into small pieces that have been melt to form granules to be used in an extrusion machine.

Recycled polymers that may be used to form the channels of the monofilament may include the following materials: polyamides (homopolymers or copolymers), in particular PA6, PA6/66, PA66, PA6/10, PA4/6, PA11, low-density polyethylene (LDPE), high-density polyethylene (HDPE), polypropylene (PP), polypropylene random copolymer (PP-R), polyethylene terephthalate glycol-modified (PET/G), either as a single material or as a combination of at least two materials.

Recycled polymers have modified physicochemical properties as compared to polymers that have been processed for the first time. In particular, recycled polymers may have a reduced viscosity, and/or a reduced impact resistance.

As a result, monofilaments made of recycled polymers have been found to have a performance reduced by about 30% as compared to monofilaments made of the same polymers but processed for the first time.

On the other hand, recycling polymers is becoming a stringent requirement for environmental reasons.

The present invention allows complying with said requirement while maintaining suitable cutting performance of the cutting monofilament. Indeed, the channels allow second use of already processed polymers, but the biopolymer or recycled polymer is protected from impacts and/or heat by the polyamide matrix that surrounds it. Besides, the structure of the monofilament allows distributing the mechanical constraints caused by an impact over the plurality of channels.

Thus, the diminished performance of the biopolymer or recycled polymer is compensated by the combined use of polyamide as a matrix surrounding the channels.

Polyamides that may be used to form the matrix of the monofilament may include: PA6, PA6/66, PA66, PA11, PA12, PA6/10, PA4/6, PA6T, either as a single material or as a combination of at least two materials.

Additional materials may be used in the matrix and/or the channels.

Such additional materials may include:
- fillers, for example natural fibers, such as flax, hemp, cellulose, or miscanthus, talc, silica, alumina (Al₂O₃), titanium oxide (TiO₂), alone or in combination;
- dyes;
- compatibilization agents, for example ethylene acrylic ester, glycidyl methacrylate (GMA), methyl acrylate, styrene acrylic, 2,3-epoxypropyl methacrylate, maleic anhydride, alone or in combination).

Polyamides and biopolymers usually have very different melting temperatures (about 220°C for polyamides, about 140°C for biopolymers), which may make it difficult to manufacture a monofilament of good quality, with a good cohesion of portions made of these materials.

In addition, polyamides and biopolymers may not be chemically compatible, which may lead to delamination of the matrix and the channels at least at the free end of the monofilament, leading to a splitting of the free end of the monofilament into a plurality of small strands, strongly reducing the cutting efficiency.

However, the mechanical construction of the monofilament itself increases the cohesion between different materials and reduces the risk of delamination, since the arrangement of the channels within the matrix provides a large surface of contact between the channels and the matrix. For example, if one considers on the one hand a monofilament comprising a core made of a biopolymer and a sheath surrounding the core, coaxial with the core, made of polyamide, and on the other hand a monofilament according to the invention, comprising four channels made of a biopolymer and a matrix enclosing the channels, with the same weight ratio between the channels (or core) and the matrix (or sheath), the surface of contact between the channels (or core) and the matrix (or sheath) is greater in the latter case. Thus, the construction of the monofilament according to the invention promotes cohesion of the matrix and the channels.

Besides, to minimise delamination, at least one compatibilization agent may be added in the monofilament. In some embodiments, such a compatibilization agent may be included in the composition of the matrix and/or the channels. In other embodiments, the compatibilization agent may be added at the interface between the channels and the matrix.

In some embodiments, the channels may be hollow. In this way, even if the material of the matrix is not a recycled material, the weight of the monofilament is reduced as compared with a plain monofilament made of the same material as the matrix. As a result, the quantity of polymer used to manufacture the monofilament is reduced.

The number, shape and arrangement of the channels within the matrix may be adjusted depending on the selected materials and required performance of the cutting monofilament.

In some embodiments, both the channels and the matrix may include a biopolymer. For example, the channels and the matrix may be made of a mixture of polyamide and starch, with different amounts of starch. Generally, the amount of starch in the matrix is lower than in the channels. For example, the matrix may comprise a mixture of polyamide and starch with a weight amount of starch comprised between 20 and 40%, and the channels may comprise a mixture of polyamide and starch with a weight amount of starch comprised between 40 and 60%. In addition, the weight amount of starch in one channel may be different from the weight amount of starch in another channel (for example between 40 and 50% in one channel and between 50 and 60% in another channel).

In preferred embodiments, the monofilament has a circular cross section, presenting typically a diameter comprised between 1.6 mm and 4.5 mm. However, other shapes may be chosen, such as square or rectangular shapes.

The channels are preferably arranged according to a regular pattern over the cross section of the monofilament. In particular, the channels may have identical cross sectional shapes and sizes and be arranged at regular intervals relative to the circumference of the monofilament and relative to each other. In other embodiments, the channels may have different cross section shapes and sizes.

The monofilament is made by a coextrusion process, i.e. a process wherein the channels and the matrix are extruded simultaneously from an extrusion head. Since the materials of the channels and the matrix are in a molten state during said extrusion step, a more intimate bonding of the materials at the interfaces between the channels and the matrix may be obtained, possibly enhanced by the use of a compatibilization agent. When the channels are hollow, a gas may be injected through corresponding holes provided in the extrusion head to define and maintain the shape of the channels within the matrix throughout the extrusion process.

If the channels are made of two different materials (both materials being different from the material of the matrix), the extrusion process is called tri-extrusion. As mentioned above, the materials of the channels and the matrix are intimately bonded at their interfaces, which provides a good cohesion of the monofilament and thus a greater resistance to shocks. In addition, such co-extrusion or tri-extrusion process allow combining various materials and thus provide a greater versatility in terms of technical performance of the monofilaments.

The matrix and channels are continuous along a longitudinal axis of the monofilament. In particular, the monofilament has the same structure at any location along the longitudinal axis.

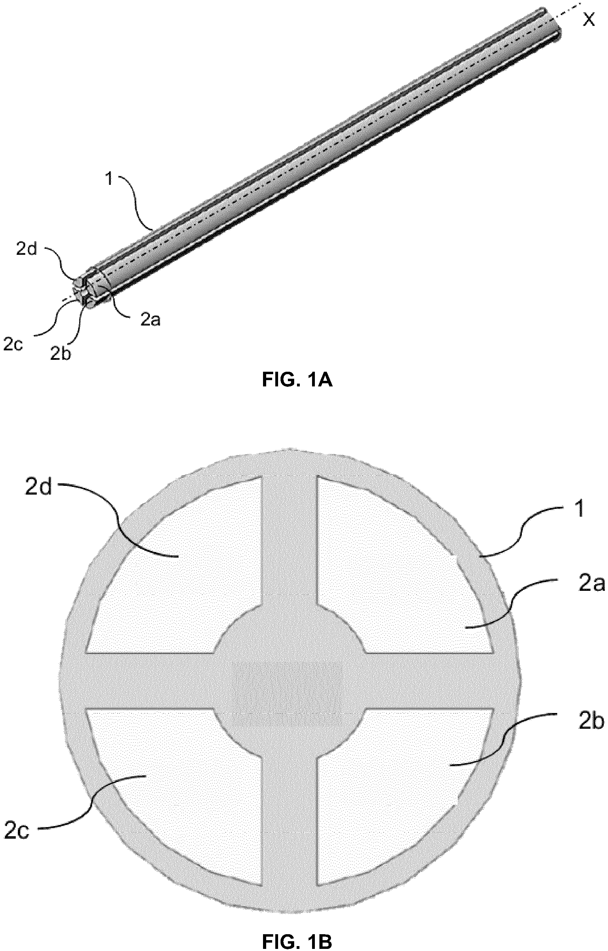

FIGS. 1A and 1B illustrate a first embodiment of the monofilament.

The monofilament has a circular cross section, which is defined by the circumference of the matrix 1.

Four channels 2a-2d are embedded in the matrix 1. All the channels have the same shape, which is defined by two opposite arcuate edges having the same center as the center of the matrix and two opposite straight edges orthogonal to each other.

The channels 2a-2d extend continuously along the longitudinal axis X of the monofilament.

In some embodiments, all the channels 2a-2d are made of the same biopolymer or recycled material.

In other embodiments, at least two channels are made of different biopolymers or recycled materials. In this way, the mechanical behavior of the monofilament may be adjusted by varying the composition of the channels.

The weight ratio between the channels 2a-2d and the matrix 1 is typically comprised between 20/80 and 80/20, preferably between 40/60 and 60/40. For example, each channel may have a weight comprised between 5 and 15% of the weight of the monofilament and the matrix has a weight comprised between 20 and 80% of the weight of the monofilament.

In other embodiments, the channels 2 are hollow.

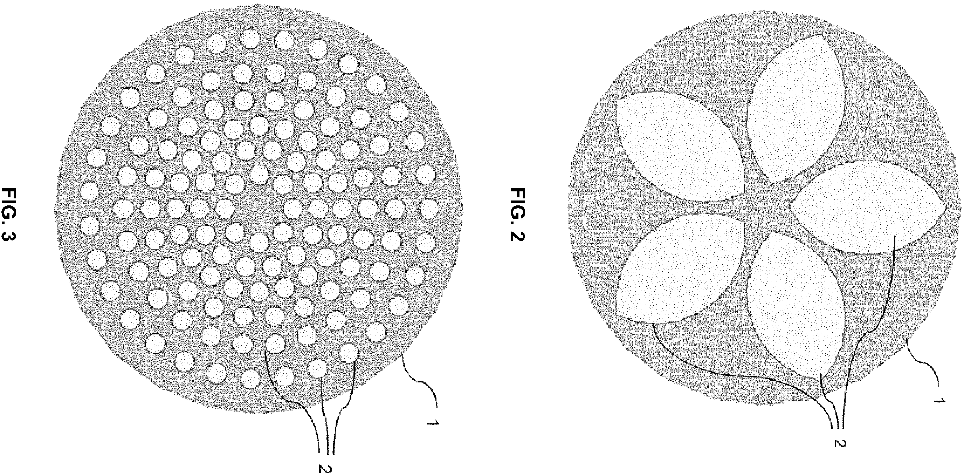

FIG. 2 illustrates a second embodiment of the monofilament.

The monofilament has a circular cross section, which is defined by the circumference of the matrix 1.

Five channels 2 are embedded in the matrix 1. All the channels have the same shape, which is defined by two opposite arcuate edges having an axis of symmetry which extends substantially radially from the center of the matrix.

The channels are regularly arranged around the center of the matrix in the form of petals.

The weight ratio between the channels 2a-2d and the matrix 1 is typically comprised between 20/80 and 80/20, preferably between 40/60 and 60/40. For example, each channel may have a weight of about 10% of the weight of the monofilament and the matrix has a weight of about 50% of the weight of the monofilament.

In other embodiments, the channels 2 are hollow.

FIG. 3 illustrates a third embodiment of the monofilament.

The monofilament has a circular cross section, which is defined by the circumference of the matrix 1.

A plurality of channels 2 having a circular cross section are arranged according to concentric circles around the center of the matrix, with identical angular distance between adjacent channels.

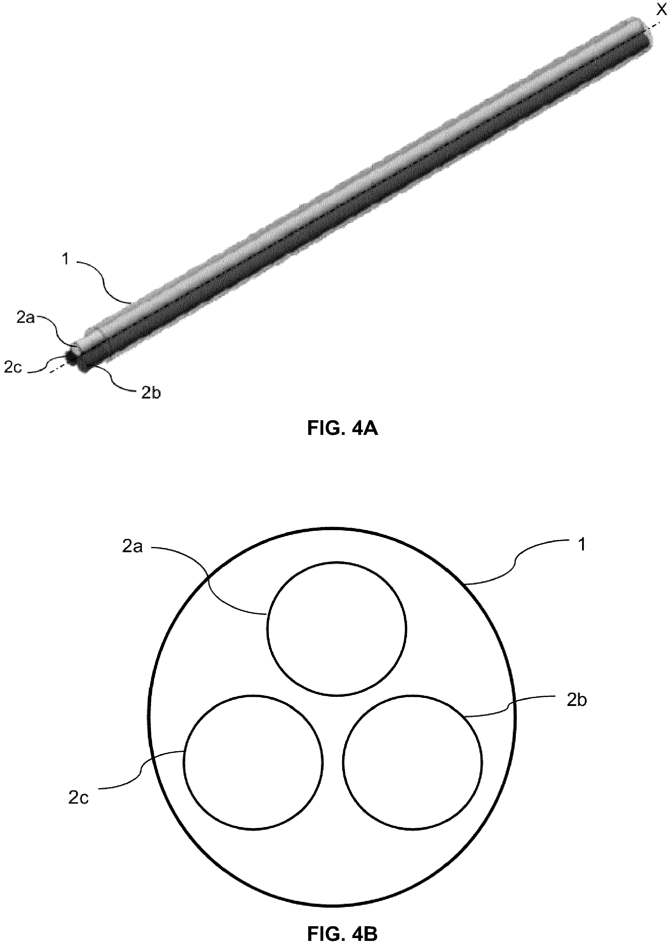

FIGS. 4A and 4B illustrate a fourth embodiment of the monofilament.

The monofilament has a circular cross section, which is defined by the circumference of the matrix 1.

Three channels 2a-2c are embedded in the matrix 1. All the channels have the same circular cross section.

The channels 2a-2c extend continuously along the longitudinal axis X of the monofilament.

In other embodiments, at least two channels are made of different biopolymers or recycled materials. In this way, the mechanical behavior of the monofilament may be adjusted by varying the composition of the channels.

The weight ratio between the channels 2a-2c and the matrix 1 is typically comprised between 40/60 and 60/40.

In some embodiments, all the channels 2a-2c are made of the same biopolymer or recycled material.

In other embodiments, the channels 2a-2c are hollow.

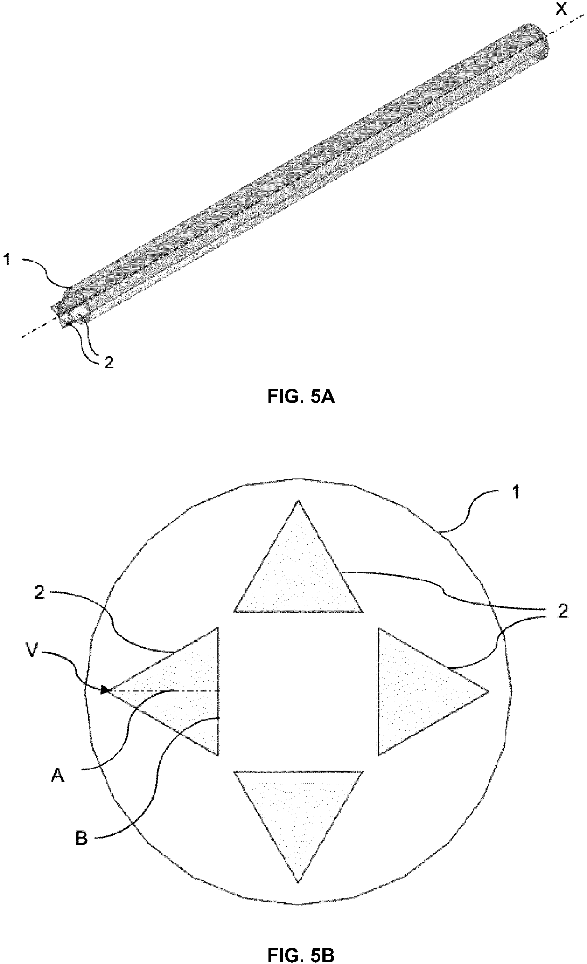

FIGS. 5A and 5B illustrate a fourth embodiment of the monofilament.

The monofilament has a circular cross section, which is defined by the circumference of the matrix 1. However, the monofilament may have any other cross section.

Channels 2 having a triangular cross section are embedded in the matrix. Preferably, the cross section of the channels is shaped as an equilateral or an isosceles triangle.

The channels are arranged such that each triangle has an altitude A, extending between a base B and a vertex V of the triangle, which is oriented radially, and such that said base B is located more inside the monofilament than the vertex V. In the illustrated embodiment, the monofilament comprises four channels 2 arranged at 90° from each other. In this case, the bases B of two opposite triangles perpendicular to said altitude A are parallel to each other, while being perpendicular to the base of the adjacent triangles. However, a different number of triangular channels may be used, e.g. from three to five channels, with the orientation described above.

This specific arrangement of the triangular channels allows further improving impact behavior. Indeed, thanks to this orientation of the channels, the peripheral portion of the monofilament (which is first involved in the absorption of an impact) contains a greater quantity of polyamide than the central portion of the monofilament, and is thus well adapted to resist to an impact. On the other hand, the triangular shape of the channels still allows including a substantial quantity of the biopolymer or recycled polymer within the monofilament.

The channels 2 extend continuously along the longitudinal axis X of the monofilament.

The weight ratio between the channels 2 and the matrix 1 is typically comprised between 20/80 and 80/20, preferably between 40/60 and 60/40.

In some embodiments, all the channels 2 are made of the same biopolymer or recycled material.

In other embodiments, at least two channels are made of different biopolymers or recycled materials. In this way, the mechanical behavior of the monofilament may be adjusted by varying the composition of the channels.

In other embodiments, the channels 2 are hollow. Even if the channels are hollow, the arrangement of the triangular channels within the monofilament provides a good impact behavior since, as explained above, the peripheral portion of the monofilament, which is first involved in the absorption of an impact, still contains a large quantity of polyamide.

### Experimental results

Tests have been carried out on three types of samples of monofilaments having a round cross section with the same outer diameter (2.4 mm), which is a widespread monofilament size.

In sample 1, the monofilament comprised a core made of a biopolymer (thermoplastic starch) and a sheath surrounding the core, coaxial with the core, made of polyamide (PA6). The ratio between the weight of the core and the weight of the sheath was about 60/40.

In sample 2, the monofilament comprised a core made of biopolymer and a sheath surrounding the core, coaxial with the core. The ratio between the weight of the core and the weight of the sheath was about 40/60.

In sample 3, the monofilament comprised four channels made of a biopolymer and a matrix made of polyamide, according to the present invention. The cross section of said monofilament is represented in FIGS. 1A and 1B. The ratio between the weight of the channels and the weight of the matrix was about 50/50.

The biopolymer and polyamide had the same compositions in all the samples. No compatibilization agent was used.

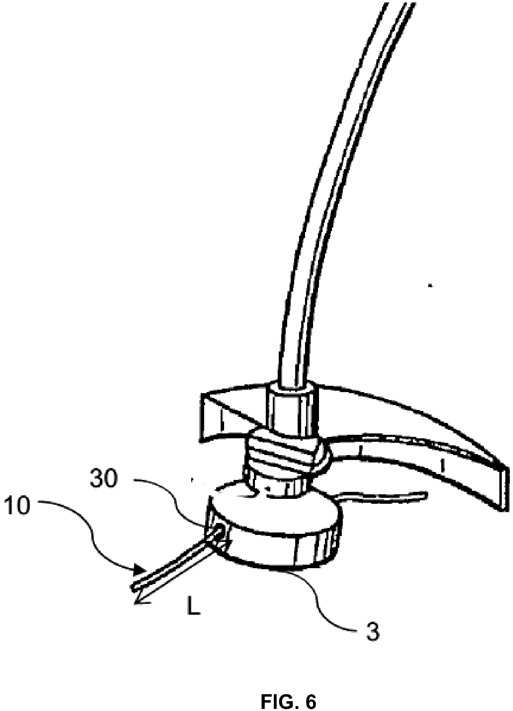

As shown in FIG. 6, each sample 10 was arranged in a cutting head 3, with a portion having a length L of 130 mm extending outwardly from an eyelet 30 of the cutting head.

The cutting head was mounted on a vegetation cutting machine to cut vegetation and operated to cut vegetation during 30 minutes, with a visual check every 5 minutes.

Then, the samples have been inspected and the length of the delaminated portion was measured.

| Sample | 1 | 2 | 3 |
|---|---|---|---|
| Delamination | Whole length of the cutting portion (from the free end to the eyelet) | 50% of the length of the cutting portion | 1 % of the length of the cutting portion |

These results show that the structure of the monofilament according to the invention is very efficient to reduce delamination and splitting of the free end of the monofilament.

## Claims

1. Monofilament for cutting vegetation, comprising:
- a matrix (1) made of a first material comprising at least one polyamide and
- at least two channels (2, 2a-2d) separately embedded in the matrix (1), the at least two channels being made of a second material different from the first material,
wherein the second material comprises at least one biopolymer and/or at least one recycled polymer.

2. Monofilament according to claim 1, wherein the at least two channels are each made of a different second material and/or each have a different cross section.

3. Monofilament according to claim 1 or claim 2, wherein the matrix extends over the whole circumference of the monofilament.

4. Monofilament according to any one of claims 1 to 3, wherein the matrix and the at least two channels extend continuously along a longitudinal axis (X) of the monofilament.

5. Monofilament according to claim 4, wherein the at least two channels are linear and parallel to the longitudinal axis (X).

6. Monofilament according to any one of claims 1 to 5, wherein the at least two channels are arranged according to a regular pattern over the cross section of the monofilament.

7. Monofilament according to any one of claims 1 to 6, wherein the at least two channels present a triangular cross section, an altitude (A) of each triangle being oriented radially between a base (B) and a vertex (V) of the triangle and said base (B) being located more inside the monofilament than said vertex (V).

8. Monofilament according to any one of claims 1 to 7, wherein the volume of the channels is comprised between 10% and 80% of the volume of the monofilament.

9. Monofilament according to any one of claims 1 to 8, wherein the first material comprises at least one of: polyamide 6, polyamide 6-6, copolyamide 6/66, polyamide 4-6, polyamide 6-10, polyamide 11, polyamide 12, polyamide 6T.

10. Monofilament according to any one of claims 1 to 9, wherein the second material comprises at least one of: polysaccharide, such as thermoplastic starch (TPS) or cellulose, polyhydroxyalkanoate (PHA), polyhydroxybutyrate (PHB), polylactic acid (PLA), polybutylene succinate (PBS), polybutylene adipate terephthalate (PBAT), polycaprolactone (PCL), and thermoplastic elastomer (TPE).

11. Monofilament according to any one of claims 1 to 10, wherein the first and second materials comprise a mixture of polyamide and starch, an amount of starch in the second material being greater than an amount of starch in the first material.

12. Monofilament according to any one of claims 1 to 11, wherein the second material comprises a filler made of at least one of: natural fibers, such as flax, hemp, cellulose, or miscanthus, talc, silica, alumina (Al₂O₃), and titanium oxide (TiO₂).

13. Monofilament according to any one of claims 1 to 12, wherein the weight of the channels is comprised between 20 and 80% of the weight of the monofilament.

14. Monofilament according to any one of claims 1 to 13, wherein the monofilament is obtained by a single extrusion step.

15. Monofilament according to claim 14, wherein the first and second materials are coextruded.

16. Monofilament according to claim 15, further comprising at least one compatibilization agent configured to promote bonding of the first and second materials.

17. Monofilament according to any one of claims 1 to 16, presenting a diameter comprised between 1.6 mm and 4.5 mm.

18. Monofilament according to any one of claims 1 to 17, further comprising at least one hollow channel embedded in the matrix.

19. Process for manufacturing a monofilament according to any one of claims 1 to 18, wherein the matrix (1) and the at least two channels (2, 2a-2d) are formed by a single extrusion step.
